# EUROPÄISCHE PATENTANMELDUNG

(11) **EP 0 678 417 A2**
(43) Veröffentlichungstag der Anmeldung: **25.10.1995**
(21) Anmeldenummer: 94120370.5
(22) Anmeldetag: 22.12.1994
(51) Int. Cl.: B60N 2/44

(54) **Schutzbezug für einen Autositz**

(30) Priorität: 23.03.1994 DE 9404950 U
(71) Anmelder: MEWA Textil-Service AG, D-65189 Wiesbaden (DE)
(72) Erfinder:
(74) Vertreter: Tergau, Enno, Dipl.-Ing.

(57) **Zusammenfassung**

Ein insbesondere für den Werkstätteneinsatz bestimmter Schutzbezug (1) für einen Automobilsitz besteht aus einer Bezugshülle mit Abdeckteil (3,5,7). Sein Sitzflächenabdeckteil (3) weist eine den Flanken der Sitzfläche zugeordnete Schürze (16) auf. Die beiden anderen Abdeckteile (5,7) sind mittels Seitenstreifen (9a,9b) miteinander verbunden und an der Lehnenabdeckung (5,7,9a,9b) sind Griffmittel (12a,12b) zum Auf- und Abziehen auf den bzw. vom Autositz angeordnet.

## Beschreibung

In Autowerkstätten besteht das Problem, daß bei der Benutzung eines Kundenfahrzeuges durch einen Kraftfahrzeugmechaniker der Sitz des Fahrzeuges durch schmutzige, insbesondere ölige Berufsbekleidung verschmutzen kann. Hierzu ist es beispielsweise üblich, Einmalschutzbezüge aus dünner Kunststoffolie auf den Sitz aufzulegen. Ein derartiger Schutzbezug läßt sich aber nur unbefriedigend handhaben und zerreißt darüber hinaus auch sehr schnell.

Eine weitere bekannte Ausführungsform ist nach Art eines doppelten Kopfkissenbezugs ausgebildet, wobei seine bezugsartigen Enden über die Lehne bzw. über die vordere Sitzkante des zu schützenden Sitzes gestülpt werden. Der eigentliche Bezugsteil liegt dann mehr oder weniger wie eine Schutzdecke auf dem Sitz auf. Auch dieser Schutzbezug läßt nur eine unbefriedigende Handhabung zu, wobei trotz der Bezugsausbildung eine Verrutschgefahr und somit eine Verschmutzungsgefahr des Sitzes besteht.

Der Erfindung liegt die Aufgabe zugrunde, einen Schutzbezug für eine kurzzeitige Anwendung bei einer Sitzvorrichtung, insbesondere einem Autositz, zu schaffen, bei dem die obengenannten Nachteile vermieden werden.

Die Lösung gelingt erfindungsgemäß mit einem Schutzbezug mit den Merkmalen des Anspruchs 1.

Der neue Schutzbezug ist einerseits dem Autositz wesentlich besser angepaßt, wodurch ein Verrutschen und somit eine Verschmutzung des Autositzes vermieden ist. Dies gilt insbesondere für die Seitenteile und die Flanken des Sitzes. Der Schutzbezug wird dem Autositz einfach - wie ein "Schuh"-übergestülpt. Die Handhabung ist dabei wesentlich verbessert, wobei eine zusätzliche Verschmutzung des Schutzbezuges durch vorgegebene Sollgriffstellen verhindert ist. Die verbesserte Handhabung und Paßform ergänzen dabei einander.

Die Ansprüche 2 bis 5 betreffen bevorzugte vorteilhafte Ausgestaltungen des Schutzbezuges, die die Paßform und seine Schutzfunktion weiter verbessern.

Mit Vorteil sind die Abdeckteile und gegebenenfalls die Schürze von einem gemeinsamen Werkstoffteil oder von einzelnen miteinander verbundenen Werkstoffteilen gebildet. Damit kann entweder eine einfache Fertigung oder auch eine Verwendung von kleineren Werkstoffteilen erzielt werden. In weiteren vorteilhaften Ausbildungen weist der Schutzbezug im Bereich des oberen Lehnenrandes und/oder im unteren Bereich der Lehne Griffmittel zum Auf- und Abziehen auf. Die Handhabung wird dabei für das Personal wesentlich vereinfacht, wobei eine Verschmutzung des Schutzbezuges an sich durch die Handhabung weitgehend verhindert ist. Die zweiten Griffmittel im unteren Bereich der Lehne sind dabei bevorzugt an den Seitenteilen angeordnet.

Der Schutzbezug ist mit Vorteil aus einem ölsaugfähigen Material, z.B. einem Microfasergewebe oder einem baumwollhaltigen Mischgewebe, gefertigt. Dadurch ist ein Durchdringen von Verschmutzungen, insbesondere Flüssigkeiten, auf den Autositz verhindert. Zusätzlich kann gegebenenfalls auch eine Schutzbeschichtung oder eine Gewebeausstattung vorgesehen sein. Das Gewebe sollte ein Gewebegewicht von 100 bis 1000g, bevorzugt etwa 300g / qm, aufweisen.

Das Gewebe hat bevorzugt eine dunkle Farbe, insbesondere grau. Dadurch ist der Schutzbezug in seiner äußeren Erscheinung relativ unempfindlich, wobei nicht vollständig entfernbare Verschmutzungen optisch kaum wahrnehmbar sind.

Weitere vorteilhafte Ausbildungen der Erfindung werden nachfolgend anhand der Zeichnung in einem Ausführungsbeispiel näher erläutert. Es zeigen:
- Fig. 1: einen Schutzbezug in aufgehängter Position in einer Rückansicht,
- Fig. 2: den auf einen Autositz aufgezogenen Schutzbezug in einer Frontansicht und
- Fig. 3: den Schutzbezug nach Fig. 2 in einer Rückansicht.

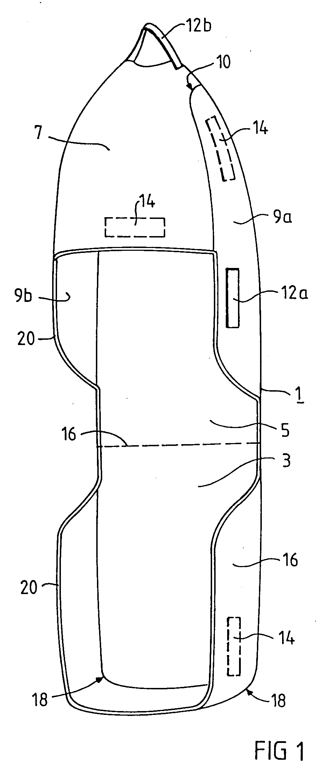

Fig. 1 zeigt einen Schutzbezug 1 für eine gepolsterte Sitzvorrichtung, insbesondere für einen Kraftfahrzeug- oder Autositz, in einer Rückansicht. Der Schutzbezug 1 befindet sich dabei in einer hängenden Lagerposition. Der Schutzbezug 1 umfaßt ein Sitzflächenabdeckteil 3, ein Lehnenvorderseitenteil 5 und ein Lehnenrückseitenteil 7 auf. Die Lehnenvorder- und -rückseitenteile 5 bzw. 7 sind mittels Seitenstreifen 9a, 9b kappenartig zum Aufsetzen auf die Lehne eines Sitzes miteinander verbunden. Im oberen Bereich der Lehne sind die Seitenstreifen 9a, 9b in runder Nahtführung 10 bogenartig mit den beiden Abdeckteilen 5, 7 verbunden.

Zum Aufziehen auf den Autositz sind Griffmittel, z.B. Grifftaschen oder erste Grifflaschen 12a, im unteren Bereich an den Seitenstreifen 9a, 9b befestigt. Damit kann der Schutzbezug 1 bequem über die Lehne gestülpt werden, ohne daß der Bezug an sich durch verschmutzte Hände beschmutzt wird. Zum Abziehen von der Lehne weist der Schutzbezug 1 im oberen Bereich, bevorzugt an seiner Stirnkante, eine zweite Grifflasche 12b auf, die wie gezeigt auch zum Aufhängen des Schutzbezuges 1 dienen kann. Weitere vorteilhafte Positionen zum Anbringen von Grifflaschen sind mit dem Bezugszeichen 14 gekennzeichnet. Die Griffmittel an den Seitenteilen 9a, 9b sind selbstverständlich beidseitig vorgesehen.

Die Abdeckteile 3, 5 und 7 sind bevorzugt von einem durchgehenden Werkstoffteil , z. B. einem Gewebeteil, gebildet. Sie können jedoch auch aus Einzelteilen zusammengesetzt sein, wobei beispielsweise eine Verbindungsnaht 16 (strichliert dargestellt) zum Verbinden des Sitzflächen- und des Lehnenvorderseitenabdeckteils 3 bzw. 5 dienen kann. Derartige Verbindungsnähte können an geeigneten Stellen, z.B. an Kanten oder in Falten, des Sitzes angeordnet werden.

Das Sitzflächenabdeckteil 3 weist an seinem Rand eine etwa rechtwinklig abstehende Schürze 16 auf, die zum Schutz der Flanken des Sitzes dient. Es weist auch bevorzugt gerundete Ecken 18 auf, an die die Schürze 16 in gerundeter Nahtführung anschließt. Die freien Ränder der Abdeckteile 3, 5, und 7 und der Schürze 16 sind zur Verstärkung und zum Schutz mit einer saumartigen Umrandung, insbesondere mit einer Paspel 20, versehen.

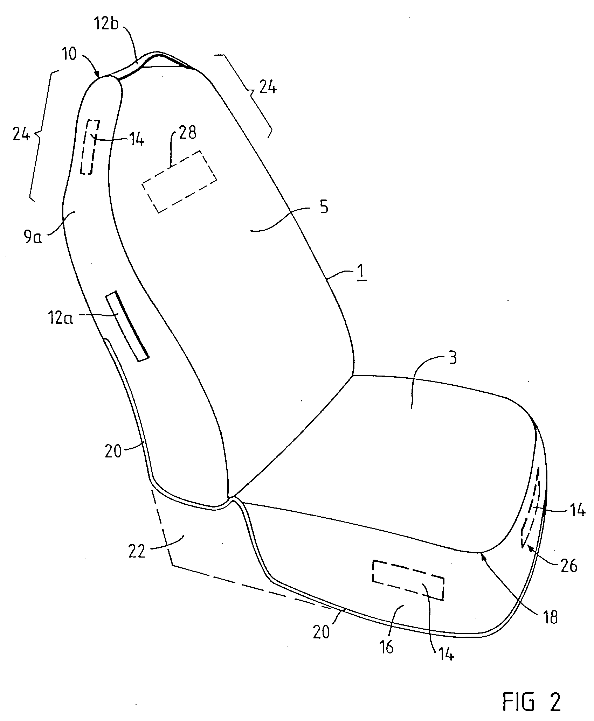

Fig. 2 zeigt den Schutzbezug 1 in einer Darstellung, wie er aufgezogen auf einem Autositz 22 ausgestaltet ist. Dabei ist zu erkennen, daß nur ein geringer Teil des Autositzes 22 vom Schutzbezug 1 nicht bedeckt ist. Gegebenenfalls können auch zum Schutz dieses Bereiches die Schürze 16 und die Seitenstreifen 9a, 9b überlappend ausgeführt sein. Wie bereits schon in Fig. 1 zu erkennen, ist hier gezeigt, daß der Schutzbezug 1 weitestgehend der Formgebung des Autositzes 22 angepaßt ist. Der Schutzbezug 1 muß dabei für möglichst viele Sitzgrößen universiell verwendbar sein.

Mit Vorteil sind die Lehnenabdeckteile 5, 7 im Bereich 24 der Kopfstütze schmaler ausgeführt, so daß eine verbesserte Paßform gegeben ist. Die Schürze 16 ist derart lang ausgeführt, daß möglichst die komplette Flanke der Sitzfläche, gegebenenfalls inklusive des Sitzsockels, vor Verunreinigung geschützt sind. Auch an der Schürze 16 sind bevorzugte Positionen 14 zum Anbringen von Griffmitteln gezeigt. Damit ist auch das Sitzflächenabdeckteil 3 besser handhabbar. Gegebenenfalls kann auch das vordere Teil 26 der Schürze 16 in Verlängerung des Sitzflächenabdeckteils 3 von diesem gebildet sein. Dies kann gegebenenfalls fertigungstechnisch oder bei der Verwendung für bestimmte Autositztypen von Vorteil sein.

Im Sichtbereich des Sitzflächen- oder Lehnenvorderseiten-abdeckteils 3 bzw. 5 kann wahlweise ein Etikett 28 zur Kennzeichnung angebracht sein. Auf diese Weise kann einerseits das Lehnenteil des Schutzbezuges 1 schnell erkannt werden. Andererseits fällt bei gleichfarbigen Autositzen auf, daß der Schutzbezug 1 noch aufgezogen ist. Ein Vergessen des Schutzbezuges 1 im Kundenfahrzeug ist damit verhindert.

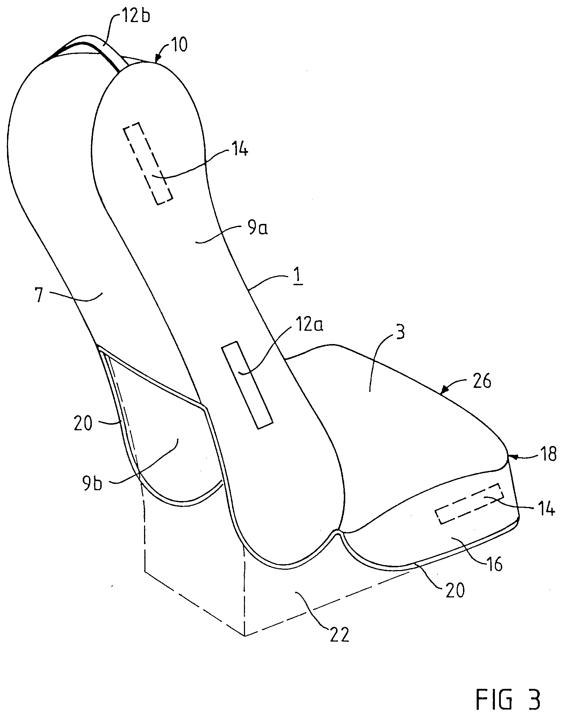

Fig. 3 zeigt den Schutzbezug 1 in einer Rückansicht. Dabei ist zu erkennen, daß die Seitenteile 9a, 9b gegenüber dem Lehnenrückseitenabdeckteil 7 verlängert ausgeführt sind. Die Verlängerung dient zum verbesserten Schutz der Seiten der Lehne. Das Lehnenrückseitenabdeckteil 7 hat im wesentlichen die Funktion der Verbesserung der Paßgenauigkeit des Schutzbezuges 1, da in der Regel für die Rückseite des Sitzes 22 keine Verschmutzungsgefahr besteht.

Der Schutzbezug 1 ist bevorzugt aus einem öl- oder flüssigkeitssaugfähigen Material, insbesondere einem Gewebe, gefertigt, wobei die einzelnen Teile miteinander vernäht sind. Das Gewebe kann beispielsweise ein baumwollhaltiges Mischgewebe oder auch ein modernes Microfaser-gewebe mit Ölsaugeffekt sein. Die Reißfestigkeit für den Kett- oder Schußfaden sollte etwa 1300 bzw. 517 N betragen. Die weiteren Materialeigenschatten sollten den einschlägigen Normen für dieses Einsatzgebiet genügen. Das Gewebe sollte ein Gewebegewicht von 100 bis 1000g, bevorzugt jedoch etwa 300 g / qm, aufweisen. Die Gewebefarbe ist bevorzugt dunkel, insbesondere grau. Es sind auch sonstige beliebige, auch gemischte Farben geeignet, wobei bevorzugt derartige verwendet werden, bei denen Verschmutzungen oder verbleibende Flecken optisch möglichst wenig wahrnehmbar sind.

Das Gewebe kann auch zumindest einseitig mit einer flüssigkeitsdichten Beschichtung versehen sein, so daß ein Durchtreten von Flüssigkeit, insbesondere Öl, auf den Autositz 22 verhindert ist. Dies kann gegebenenfalls auch durch eine "Ausstattung" des Gewebes erzielt werden.

Die Verwendung eines baumwollhaltigen Gewebes bietet einen guten Sitzkomfort und ist in der Handhabung hautfreundlich. Bei einem derartigen Gewebe ist auch eine Waschbarkeit gegeben, so daß eine Mehrwegbenutzung möglich ist. Dadurch werden Rohstoffe geschont und Abfall vermieden.

Die Griffmittel, insbesondere die Grifflaschen 12a, 12b, können aus einem Material mit erhöhtem Kunststoffanteil gefertigt sein, wodurch eine erhöhte Stabilität bei der Handhabung gegeben ist. Bei Ausführung als Grifflaschen 12a, 12b sollten diese mit verstärkten oder doppelten Nähten am Schutzbezug 1 befestigt sein.

### Bezugszeichenliste

- 1: Schutzbezug
- 3: Sitzflächenabdeckteil
- 5: Lehnenvorderseitenabdeckteil
- 7: Lehnenrückseitenabdeckteil
- 9a: Seitenstreifen
- 9b: Seitenstreifen
- 10: Nahtführung
- 12a: Griffschlaufe/ Griffmittel
- 12b: Griffschlaufe/ Griffmittel
- 14: Position für Grifflasche
- 16: Verbindungsnaht
- 16: Schürze
- 18: Ecke
- 20: Paspel
- 22: Autositz
- 24: oberer Bereich
- 26: vorderer Bereich
- 28: Etikett

## Patentansprüche

1. Schutzbezug (1) für eine Sitzvorrichtung (22) mit Abdeckteilen (3, 5, 7) für die Sitzfläche und für die Lehnenvorder- und -rückseite,
- wobei die Lehnenvorder und -rückseitenabdeckteile (5, 7) unter Bildung einer Bezugshülle miteinander verbunden sind und das Sitzflächenabdeckteil (3) eine den Flanken der Sitzfläche zugeordnete Schürze (16) aufweist,
dadurch gekennzeichnet,
- daß die Lehnenvorder- und -rückseitenabdeckteile (5, 7) mittels Seitenstreifen (9a, 9b) miteinender verbunden sind und
- daß an der Lehnenabdeckung (5, 7, 9a, 9b) Griffmittel zum Auf- und Abziehen auf beziehungsweise vom Autositz (22) angeordnet sind.

2. Schutzbezug nach Anspruch 1,
dadurch gekennzeichnet,
daß die Seitenstreifen (9a, 9b) länger als das Lehnenrückseitenabdeckteil (7) sind.

3. Schutzbezug nach Anspruch 1 oder 2,
dadurch gekennzeichnet,
daß die Seitenstreifen (9a, 9b) im oberen Bereich der Lehne in gerundeter Nahtführung (10) die zwei Lehnenabdeckteile (5, 7) miteinander verbinden.

4. Schutzbezug nach Anspruch 1, 2 oder 3,
dadurch gekennzeichnet,
daß die Lehnenabdeckteile (5, 7) im Bereich der Kopfstütze des Sitzes (22) gegenüber dem übrigen Bereich eine geringere Breite aufweisen.

5. Schutzbezug nach einem der vorhergehenden Ansprüche,
dadurch gekennzeichnet,
daß die Abdeckteile (3, 5, 7, 9a, 9b, 16) in ihrer Formgebung im wesentlichen an die Form des Sitzes im Sinne einer universiellen Verwendung angepaßt ist.

6. Schutzbezug nach einem der vorhergehenden Ansprüche,
dadurch gekennzeichnet,
daß die Abdeckteile (3, 5, 7, 9a, 9b) und gegebenenfalls die Schürze (16) von einem gemeinsamen oder von einzelnen miteinander verbundenen Werkstoffteilen gebildet sind.

7. Schutzbezug nach einem der vorhergehenden Ansprüche,
dadurch gekennzeichnet,
daß die freien Ränder der einzelnen Teile mit einer Paspel (20) eingefaßt sind.

8. Schutzbezug nach einem der vorhergehenden Ansprüche,
dadurch gekennzeichnet,
daß die Sitzflächenabdeckung (3) im Bereich der Sitzkantenecken (18) gerundet ist, an denen die Schürze (16) bogenförmig anschließt.

9. Schutzbezug nach einem der vorhergehenden Ansprüche,
dadurch gekennzeichnet,
daß die Griffmittel als Grifflaschen (12a, 12b), Griffschlaufen oder als Grifftaschen ausgeführt sind.

10. Schutzbezug nach einem der vorhergehenden Ansprüche,
dadurch gekennzeichnet,
daß zumindest ein erstes Griffmittel (12b) zum Abziehen im Bereich (24) des oberen Lehnenrandes angeordnet ist, das insbesondere zum Aufhängen dient.

11. Schutzbezug nach einem der vorhergehenden Ansprüche,
dadurch gekennzeichnet
daß zum Aufziehen im unteren Bereich der Lehne zumindest ein zweites Griffmittel (12a) angeordnet ist.

12. Schutzbezug nach einem der vorhergehenden Ansprüche,
dadurch gekennzeichnet,
daß die ersten oder die zweiten Griffmittel (12a, 12b) an den Seitenteilen (9a, 9b) angeordnet sind.

13. Schutzbezug nach einem der vorhergehenden Ansprüche,
dadurch gekennzeichnet,
daß dieser aus einem ölsaugfähigen Material, insbesondere einem Gewebe, gefertigt ist.

14. Schutzbezug nach Anspruch 13,
dadurch gekennzeichnet,
daß das Gewebe nach Art eines Microfasergewebes mit Ölsaugeffekt ausgebildet ist.

15. Schutzbezug nach einem der vorhergehenden Ansprüche,
dadurch gekennzeichnet,
daß dieser aus einem baumwoll-haltigen Mischgewebe gefertigt ist.

16. Schutzbezug nach Anspruch 13, 14 oder 15,
dadurch gekennzeichnet,
daß das Gewebe 100 bis 1000g/m², bevorzugt etwa 300g/m^{2,} Gewebegewicht aufweist.

17. Schutzbezug nach einem der Ansprüche 13 bis 16,
dadurch gekennzeichnet,
daß das Gewebe eine dunkle Farbe, insbesondere Grau, hat.
